# FASCICULE DE BREVET EUROPEEN

(11) **EP 2 446 144 B1**
(45) Date de publication et mention de la délivrance du brevet: **23.08.2017**
(21) Numéro de dépôt: 10734282.6
(22) Date de dépôt: 21.06.2010
(51) Int. Cl.: F03G 1/00

(54) **DISPOSITIF DE STOCKAGE ET DE RESTITUTION D'ÉNERGIE MÉCANIQUE**
VORRICHTUNG ZUR SPEICHERUNG UND WIEDERHERSTELLUNG VON MECHANISCHER ENERGIE
DEVICE FOR STORING AND RESTORING MECHANICAL ENERGY

(30) Priorité: 25.06.2009 FR 0954339
(43) Date de publication de la demande: 02.05.2012
(73) Titulaire: Exojoule, 78890 Garancieres (FR)
(72) Inventeur: COLAS, Olivier, F-78890 Garancieres (FR)
(74) Mandataire: Mazabraud, Xavier
(86) Numéro de dépôt international: PCT/FR2010/051245
(87) Numéro de publication internationale: WO 2010/149912

(56) Documents cités:
- EP-A2- 1 001 165
- DE-A1- 3 217 539
- DE-A1-102005 045 212
- US-A- 3 812 933

## Description

L'invention porte sur un dispositif de stockage et de restitution d'énergie mécanique, pouvant être utilisé comme moteur dans de nombreuses applications, telles que les jouets ou la propulsion de véhicules. Il peut également convenir idéalement comme appoint pour la propulsion hybride. On connaît de nombreux dispositifs de stockage et de restitution d'énergie mécanique, appelés moteurs à ressort, dans lesquels l'énergie mécanique est stockée en tendant de plus en plus le ressort, ce qui présente plusieurs inconvénients :
- dans sa volonté de stocker la plus grande énergie possible, il est fréquent que l'utilisateur casse le ressort ou son mécanisme de mise en tension,
- lors de la libération de l'énergie stockée dans le ressort, la force qu'il exerce n'est pas constante : elle est très forte au début puis diminue progressivement au fur et à mesure que le ressort se détend.

Le document DE 10 2005 045212 A1 est considéré comme le document décrivant l'état de la technique antérieure le plus proche.

Il existe donc un besoin pour un dispositif de stockage et de restitution d'énergie mécanique comportant un moyen élastique, dans lequel le stockage et la libération de l'énergie s'effectuent à tension constante.

A cet effet, l'invention propose un dispositif de stockage et de restitution d'énergie mécanique comportant :
- un premier et un second tambours d'axes parallèles et sensiblement en regard l'un de l'autre,
- un moyen élastique apte à s'enrouler sur la périphérie de chacun des tambours,
- lesdits axes étant couplés par des moyens de couplage de telle sorte que la rotation d'un tambour entraîne la rotation angulairement proportionnelle de l'autre, la vitesse linéaire de la périphérie du premier tambour étant supérieure à celle du second tambour.

Le ressort du dispositif est constitué d'un moyen élastique, par exemple un brin en matériau élastique suffisamment long pour pouvoir être bobiné sur la périphérie d'un premier et d'un second tambours. Les tambours sont d'axes parallèles, fixes l'un par rapport à l'autre, et sont couplés en rotation de telle sorte que :
- la rotation d'un tambour entraîne obligatoirement la rotation de l'autre,
- la vitesse linéaire de la périphérie du premier tambour est supérieure à celle du second tambour.

Ainsi, à partir d'une situation où le brin élastique est entièrement enroulé sans tension ou avec une tension faible sur le second tambour, la solidarisation de l'extrémité libre du brin sur la périphérie du premier tambour puis l'entraînement en rotation des deux tambours provoque une tension du brin élastique du fait que la vitesse linéaire de la périphérie du premier tambour est supérieure à celle du second tambour, et donc son enroulement sur la périphérie du premier tambour sous une tension constante. Il est à noter que, du fait du frottement entre spires et/ou sur la périphérie du second tambour, cette tension ne se communique pas à la partie du brin qui reste enroulée sur ce tambour.

Par rapport aux systèmes à ressort traditionnels, on substitue donc à une tension croissante appliquée à l'ensemble du ressort, une tension constante sur une portion croissante du ressort. Cette tension constante ne dépend que du rapport des vitesses linéaires des périphéries du premier et du second tambour. Par exemple, si ce rapport est de 2, l'enroulement du brin sur le premier tambour provoquera un allongement dudit brin d'un facteur 2.

Dans les systèmes traditionnels, l'énergie stockée est proportionnelle à la tension appliquée au ressort. Dans le système selon l'invention, elle est proportionnelle à la longueur de brin élastique sous tension sur le premier tambour.

Avantageusement, les moyens de couplage peuvent comporter des moyens pour choisir le rapport des vitesses linéaires aux périphéries du premier et du second tambours parmi plusieurs valeurs dudit rapport.
De cette façon, on peut ajuster la tension avec laquelle le brin est enroulé sur le premier tambour, et donc la « force » du moteur.

Avantageusement, les deux tambours peuvent être de diamètres différents, le premier tambour étant celui de plus grand diamètre, les moyens de couplage étant configurés de façon à ce que les deux tambours tournent à la même vitesse angulaire.
Dans ce cas, le rapport des vitesses linéaires est constant et égal au rapport des diamètres des tambours.

L'invention prévoit deux modes de réalisation :
- les moyens de couplage peuvent être configurés pour que les tambours tournent dans le même sens ; dans ce cas, le moyen élastique ne croise pas le plan constitué par les axes des tambours ou le croise en dehors des axes,
- les moyens de couplage peuvent être configurés pour que les tambours tournent en sens inverse ; dans ce cas, le moyen élastique croise le plan constitué par les axes des tambours entre les axes.

Avantageusement, les moyens de couplage peuvent être des moyens mécaniques, par exemple une courroie crantée.

Avantageusement, chaque extrémité du moyen élastique peut être fixée à la périphérie d'un tambour respectif, ce qui facilite l'utilisation du dispositif.

Avantageusement, le dispositif peut comporter en outre un moyen d'application d'un couple extérieur apte à entraîner les tambours en rotation, de façon à permettre à l'utilisateur de tendre le brin élastique dans la phase de stockage d'énergie ; ce moyen peut consister par exemple en un moteur électrique, un accouplement à un axe de roue de véhicule permettant de tendre le brin élastique lorsque ce véhicule est en décélération, ou encore une manivelle montée sur l'axe de l'un ou l'autre des tambours.

Avantageusement, le moyen d'application d'un couple extérieur peut être déconnecté des tambours, de façon par exemple à ce qu'il ne soit pas entraîné dans la phase de restitution d'énergie, ce qui pourrait être à l'origine d'une déperdition d'énergie et d'une gêne. Par exemple, il peut être monté sur un axe de tambour par l'intermédiaire d'un mécanisme à roue libre ou d'un embrayage.

Avantageusement, le dispositif comporte en outre un moyen de freinage et/ou de blocage de la rotation desdits tambours.
En effet, l'utilisateur du dispositif peut ne pas avoir besoin de restituer immédiatement l'énergie stockée. Il est dans ce cas utile que le dispositif comporte un moyen de blocage des tambours en rotation. De même, il peut souhaiter contrôler la vitesse de restitution de cette énergie, ce que lui permettra un moyen de freinage.

L'énergie restituée sur les axes des tambours peut servir par exemple à entraîner le mécanisme de propulsion d'un véhicule, un alternateur ou le mécanisme d'animation d'un jouet.

L'invention porte également sur un système de propulsion de véhicule comportant un premier et un second dispositifs,
- les premiers tambours des dispositifs étant montés sur un axe commun par l'intermédiaire de dispositifs à roue libre montés dans le sens moteur,
- le second tambour du premier dispositif étant monté sur l'axe d'une roue du véhicule et étant apte à être entraîné par ladite roue par l'intermédiaire d'un dispositif débrayable,
- le second tambour du second dispositif étant monté sur l'axe d'un moyen d'entraînement et étant apte à être entraîné par le moyen d'entraînement par l'intermédiaire d'un dispositif débrayable.

Ce système comporte quatre modes de fonctionnement :
- stockage d'énergie sur le second dispositif par le moyen d'entraînement, par exemple un moteur électrique, lorsque le véhicule est à l'arrêt,
- stockage d'énergie sur le premier dispositif par la roue lorsque le véhicule avance, par exemple lorsqu'il est en phase de décélération,
- entraînement de la roue par le second dispositif,
- entraînement de la roue par le premier dispositif.

Les seconds tambours des deux dispositifs sont entraînés sur leur axe respectif par l'intermédiaire d'un embrayage de façon à n'actionner le stockage d'énergie qu'en tant que de besoin.
Le premier dispositif est avantageusement du type où les tambours tournent en sens inverse, car la roue tourne toujours dans le même sens, que ce soit en phase de stockage ou en phase de restitution d'énergie. Le premier tambour doit donc tourner en sens inverse de la roue en phase de stockage pour pouvoir restituer l'énergie du brin élastique dans le sens de rotation de la roue.
Le type du second dispositif dépend du type de moteur :
- si le moteur tourne dans le même sens que la roue, le second dispositif doit également être du type où les tambours tournent en sens inverse, pour la même raison,
- si le moteur tourne dans le sens inverse de la roue, le second dispositif sera du type où les tambours tournent dans le même sens.

Un mode d'exécution de l'invention sera décrit ci-après, à titre d'exemple non limitatif, avec référence aux dessins annexés dans lesquels :
La figure 1 est une représentation schématique en élévation d'un dispositif selon l'invention,
La figure 2 est une représentation schématique en élévation d'un autre dispositif selon l'invention,
La figure 3 est une représentation schématique d'un système de propulsion selon l'invention.

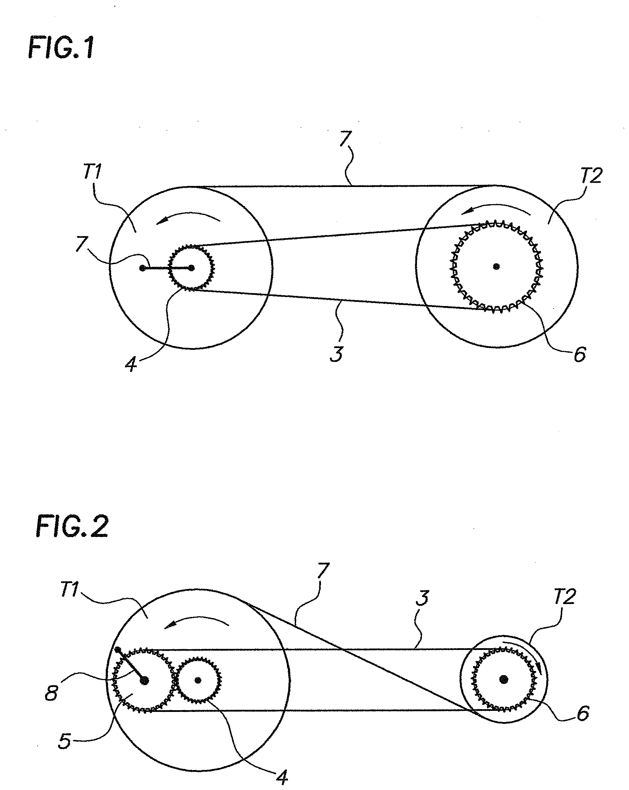

Le dispositif illustré en figure 1 comporte un premier et un second tambours, respectivement T1 et T2, d'axes parallèles et à distance fixe, de diamètres sensiblement égaux, comportant des pignons respectivement 4 et 6 de diamètres différents ; dans l'exemple représenté, le diamètre du pignon 6 solidaire du tambour T2 est sensiblement le double de celui du pignon 4 solidaire du tambour T1. Une courroie crantée 3 engrène les pignons 4 et 6, de sorte que les tambours T1 et T2 sont solidaires en rotation. Du fait du rapport des pignons 4 et 6, lorsque les tambours sont entraînés en rotation, le tambour T1 fait deux tours lorsque le tambour T2 fait un tour.
Un brin élastique 7 est enroulé à la périphérie des deux tambours sans croiser la courroie crantée 3. Si ce brin 7 est enroulé sans tension sur le second tambour T2, il s'enroule avec tension sur le premier tambour T1 lorsqu'ils sont mis en rotation dans la phase de stockage d'énergie, du fait de la différence de vitesse linéaire entre la périphérie des deux tambours. L'entraînement en rotation des tambours se fait à l'aide d'une manivelle 8 solidaire de l'axe du tambour T1, mais elle pourrait être solidaire de l'axe du tambour T2 du fait que les deux tambours sont solidaires en rotation. Cette manivelle 8 peut être montée sur un axe par l'intermédiaire d'un premier mécanisme à roue libre ou d'un embrayage de façon à ne pas être entraînée dans la phase de restitution d'énergie.
Dans cette phase de restitution d'énergie, le dispositif entraîne une charge (non représentée) par exemple couplée à l'axe d'un tambour ou engrenée sur la périphérie de l'un des tambours. Ce couplage peut s'effectuer par l'intermédiaire d'un second mécanisme à roue libre, monté en sens inverse du premier mécanisme à roue libre de façon à ne pas être entraîné dans la phase de stockage d'énergie.

Le dispositif de la figure 2 illustre un autre mode de réalisation. Les tambours sont cette fois de diamètres différents, le diamètre du premier tambour T1 étant sensiblement le double de celui du second tambour T2.
Le pignon 4 du premier tambour T1 engrène un second pignon 5 de diamètre légèrement supérieur à celui du pignon 4, l'axe du second pignon 5 étant fixe par rapport aux axes des tambours T1 et T2. Une courroie crantée 3 relie le second pignon 5 et le pignon 6 du second tambour T2, de sorte que les tambours tournent en sens inverse.
Si on néglige la différence des diamètres des pignons 4 et 5, les tambours T1 et T2 tournent à des vitesses angulaires sensiblement égales, mais du fait du rapport de leurs diamètres, la vitesse linéaire de la périphérie du premier tambour T1 est sensiblement le double de celle du second tambour T2.
Un brin élastique 7 est enroulé à la périphérie des deux tambours en croisant le plan des axes des tambours. Comme pour le dispositif précédent, la mise en rotation des tambours provoque l'enroulement sous tension de ce brin élastique 7 sur la périphérie du premier tambour T1.
Comme pour le dispositif illustré par la figure 1, l'entraînement des tambours en rotation peut se faire par l'intermédiaire d'une manivelle 8 solidaire de l'axe de l'un des tambours, ou solidaire de l'axe du pignon 5, montée par l'intermédiaire d'un mécanisme à roue libre.

De façon générale, de nombreuses combinaisons de diamètres de tambours et de pignons sont envisageables, pourvu que la rotation d'un tambour entraîne obligatoirement celle de l'autre et que la vitesse linéaire de la périphérie d'un tambour, appelé premier tambour, soit supérieure à celle du second tambour.

Outre une courroie crantée, les moyens de couplage peuvent comprendre :
- une courroie lisse,
- une chaîne,
- un train de pignons,
- des moteurs électriquement commandés de façon que leurs vitesses de rotation soient sensiblement toujours proportionnelles.

Le moyen élastique peut comprendre une pluralité de brins élastique, voire une nappe ou une lame de matériau élastique.

Dans les exemples de modes de réalisation illustrés, le rapport de proportion entre les vitesses linéaires de la périphérie des tambours a été choisi égal à deux, mais toute autre valeur compatible avec l'élasticité du moyen élastique est possible.

La périphérie des tambours peut être lisse ou comporter une gorge hélicoïdale pour recevoir le(s) brin(s) élastique(s).

L'entraînement en rotation des tambours peut se fait à l'aide d'un couple embrayage/manivelle ou d'un couple embrayage/moteur. L'embrayage peut être remplacé par un crabot. Le moyen d'entraînement peut être amovible.

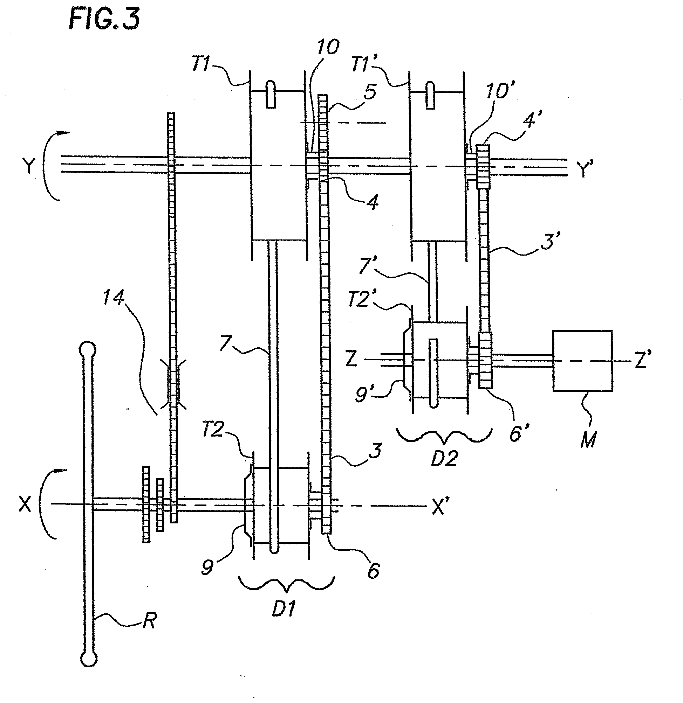

Le système de propulsion illustré par la figure 3 comprend deux dispositifs D1 et D2, comportant respectivement des premiers tambours T1 et T1', et des seconds tambours T2 et T2', ainsi que des brins élastiques 7 et 7'. Les tambours T1 et T2 (resp. T1' et T2') sont couplés en rotation par l'intermédiaire d'une courroie crantée 3 (respectivement 3').

Les premiers tambours T1 et T1' sont montés sur un axe commun Y-Y' par l'intermédiaire de dispositifs à roue libre montés 10 et 10' dans le sens moteur. Le second tambour T2 du premier dispositif D1 est monté libre sur l'axe X-X' d'une roue R de véhicule ; il n'est entraîné par cet axe que lorsque le dispositif d'embrayage 9 est embrayé.

Le second tambour T2' du second dispositif D2 est monté libre sur l'axe Z-Z' d'un moteur M. Il n'est entraîné par cet axe que lorsque le dispositif d'embrayage 9' est embrayé.

Les axes X-X' et Y-Y' sont couplés en rotation par l'intermédiaire d'un moyen d'entraînement 14 comportant une chaîne, un ensemble de pignons et un dérailleur, les pignons étant montés sur roue libre motrice.

Les dispositifs D1 et D2 sont utilisés pour stocker de l'énergie :
- le premier dispositif D1 stocke de l'énergie par exemple lorsque le véhicule est en décélération ; l'embrayage 9 est alors actionné, ce qui provoque la mise en rotation des tambours T1 et T2 et l'enroulement sous tension du brin élastique 7 sur le premier tambour T1 ; celui-ci peut tourner librement sur l'axe commun Y-Y' en sens inverse du sens de rotation de cet axe grâce à son montage sur roue libre 10. L'énergie est récupérée sur l'axe Y-Y' en débrayant l'embrayage 9.
- le second dispositif D2 stocke de l'énergie fournie par le moteur M par exemple lorsque le véhicule est à l'arrêt. L'actionnement de l'embrayage 9' provoque la mise en rotation des tambours T1' et T2' et l'enroulement sous tension du brin élastique 7' sur le premier tambour T1' ; celui-ci peut tourner librement sur l'axe commun Y-Y' en sens inverse du sens de rotation de cet axe grâce à son montage sur roue libre 10'. L'énergie est récupérée sur l'axe Y-Y' en débrayant l'embrayage 9'.

Dans le mode de réalisation de la figure 3, l'enroulement du brin 7 du premier dispositif D1 croise le plan des axes X-X' et Y-Y' car le brin élastique 7 doit s'enrouler sous tension dans le sens inverse du sens de rotation des axes.

L'enroulement du brin élastique 7' sur le premier tambour T1' du second dispositif D2 doit se faire dans le même sens que celui du brin élastique 7 du premier dispositif, en revanche, il croise ou ne croise pas le plan des axes Y-Y' et Z-Z', selon le sens de rotation du moteur M.

Ce système de propulsion peut avantageusement être employé dans un système de propulsion hybride de véhicule, le moyen de propulsion principal attaquant soit l'axe X-X' de la roue soit l'axe commun Y-Y'.

## Revendications

1. Système de propulsion d'un véhicule comportant un premier et un second dispositifs (D1, D2) de stockage et de restitution d'énergie mécanique, chaque dispositif comportant :
- un premier et un second tambours (T1, T2 ; T'1, T'2) d'axes parallèles et sensiblement en regard l'un de l'autre,
- un moyen élastique (7 ; 7') apte à s'enrouler sur la périphérie de chacun desdits tambours,
- lesdits axes étant couplés par des moyens de couplage (3, 4, 5, 6 ; 3', 4', 5') de telle sorte que la rotation d'un tambour entraîne la rotation angulairement proportionnelle de l'autre, et que la vitesse linéaire à la périphérie du premier tambour (T1 ; T'1) soit supérieure à celle du second tambour (T2 ; T'2),
ledit système étant **caractérisé en ce que** :
- les premiers tambours (T1, T1') desdits dispositifs sont montés sur un axe commun (Y-Y') par l'intermédiaire de dispositifs à roue libre (10, 10') montés dans le sens moteur,
- le second tambour (T2) du premier dispositif (D1) est monté sur l'axe (X-X') d'une roue (R) dudit véhicule et est apte à être entraîné par ladite roue par l'intermédiaire d'un dispositif débrayable (9),
- le second tambour (T2') du second dispositif (D2) est monté sur l'axe (Z-Z') d'un moyen d'entraînement (M) et est apte à être entraîné par ledit moyen d'entraînement (M) par l'intermédiaire d'un dispositif débrayable (9').

2. Système de propulsion hybride d'un véhicule comprenant le la système de propulsion selon la revendication 1.

3. Véhicule comprenant le système de propulsion selon la revendication 1 ou un système de propulsion hybride selon la revendication 2.

## Patentansprüche

1. Antriebssystem eines Fahrzeugs, das eine erste und eine zweite Vorrichtung (D1, D2) zum Speichern und Rückgewinnen von mechanischer Energie umfasst, wobei jede Vorrichtung umfasst:
- eine erste und eine zweite Rolle (T1, T2; T'1, T'2) mit parallelen Achsen und einander im Wesentlichen gegenüberstehend,
- ein elastisches Mittel (7; 7'), das dafür geeignet ist, sich auf dem Umfang jeder der Rollen aufzuwickeln;
- wobei die Achsen durch Kopplungsmittel (3, 4, 5, 6; 3', 4', 5') so gekoppelt sind, dass die Drehung der einen Rolle die winkelmäßig proportionale Drehung der anderen hervorruft und dass die Lineargeschwindigkeit auf dem Umfang der ersten Rolle (T1; T'1) größer als diejenige der zweiten Rolle (T2; T'2) ist,
wobei das System **dadurch gekennzeichnet ist, dass**:
- die ersten Rollen (T1, T1') der Vorrichtungen (Y-Y') mittels Freilaufvorrichtungen (10, 10'), die in Motorrichtung montiert sind, auf einer gemeinsamen Achse montiert sind;
- die zweite Rolle (T2) der ersten Vorrichtung (D1) auf der Achse (X-X') eines Rades (R) des Fahrzeugs montiert ist und dafür geeignet ist, durch das Rad mit Hilfe einer auskuppelbaren Vorrichtung (9) angetrieben zu werden,
- die zweite Rolle (T2') der zweiten Vorrichtung (D2) auf der Achse (Z-Z') einer Antriebseinrichtung (M) montiert ist und dafür geeignet ist, durch die Antriebseinrichtung (M) mittels einer auskuppelbaren Vorrichtung (9') angetrieben zu werden.

2. Hybridantriebssystem eines Fahrzeugs umfassend das Antriebssystem nach Anspruch 1.

3. Fahrzeug umfassend das Antriebssystem nach Anspruch 1 oder ein Hybridantriebssystem nach Anspruch 2.

## Claims

1. Propulsion system for a vehicle comprising first and second devices (D1, D2) for storing and restoring mechanical energy, each device comprising:
- first and second drums (T1, T2; T'1, T'2) having parallel axes substantially opposite each other,
- a resilient means (7; 7') that can be wound over the periphery of each of said drums,
- said axes being coupled by coupling means (3, 4, 5, 6; 3', 4', 5') such that the rotation of one drum results in a proportional angular rotation of the other, and such that the linear speed at the periphery of the first drum (T1; T'1) is higher than at that of the second drum (T2; T'2),
said system being **characterised in that**:
- the first drums (T1, T1') of said devices are mounted about a common axis (Y-Y') via overrunning clutch devices (10, 10') mounted in the direction of the motor,
- the second drum (T2) of the first device (D1) is mounted about the axis (X-X') of a wheel (R) of said vehicle and is capable of being driven by said wheel via a disengageable device (9),
- the second drum (T2') of the second device (D2) is mounted about the axis (Z-Z') of a drive means (M) and is capable of being driven by said drive means (M) via a disengageable device (9').

2. Hybrid propulsion system for a vehicle comprising the propulsion system according to claim 1.

3. Vehicle comprising the propulsion system according to claim 1 or comprising a hybrid propulsion system according to claim 2.
